# EUROPEAN PATENT APPLICATION

(11) **EP 1 670 267 A1**
(43) Date of publication of application: **14.06.2006**
(21) Application number: 04029447.2
(22) Date of filing: 13.12.2004
(51) Int. Cl.: H04Q 7/32, H04Q 7/34, H04M 1/24

(54) **Simplified servicing of a portable communication device**

(71) Applicant: Sony Ericsson Mobile Communications AB, 221 88 Lund (SE)
(72) Inventor: Nelson, Joakim, 22270 Lund (SE)
(74) Representative: Dahnér, Christer

(57) **Abstract**

The present invention is directed towards a method, portable communication device and computer program product for providing information relating to the service of the portable communication device to a service providing centre. A control unit of the portable communication device fetches a set of device related data when it is necessary to obtain service or provide the status of the device, (step 40), where said set is stored locally in the device as a single unit and at least comprises data regarding type of device, type of software provided in the device, and network settings for communication using at least one communication network. The control unit then orders a radio communication unit to send the set of data to the service providing centre, (step 42). In this way a user can be quickly serviced, and problems associated with the device quickly resolved.

## Description

### TECHNICAL FIELD OF THE INVENTION

The present invention relates to the field of portable communication devices and then preferably portable communication devices used in telecommunication. More particularly the present invention relates to a method, portable communication device and a computer program product for providing information relating to the service of a portable communication device to a service providing centre.

### DESCRIPTION OF RELATED ART

Portable communication devices and then in particular cellular phones have in recent years become more and more complex and filled with more and more functionalities, where the functionalities can relate to the device itself, like calendars, phonebooks etc. as well as network related functionalities. However, normally the device has a rather advanced menu system provided in the device for locating information, which makes it hard for the user to know where to locate information relating to the performance of the phone and in some cases it is not possible to locate at all.

Because of the ever increasing number of functions provided, there is furthermore a demand for good support of the device. As the amount of software increases in the portable communication devices, the complexity also increases. Another problem that is encountered is that software can be provided in several versions and phones can be provided in several different models, which makes it hard for a support function to service such a phone in an efficient way.

It is known within the field of portable communication devices, to simplify the initial setting of various functions of a portable communication device. It is for instance known for a user of a portable communication device to log on to an Internet server of an operator, there choose the model of his phone, enter his phone number and then directly receive settings to be applied for the phone in a specialised electronic message, such as a specialised SMS message that sends the settings to the phone, which settings the phone then automatically applies and then the phone is ready for use. Such settings can typically be so called WAP (Wireless Application Protocol) settings and settings regarding e-mail servers, e-mail accounts etc.

It is however not known to provide these types of solutions for servicing of a portable communication device.

There is thus a need for simplifying the servicing of a portable communication device after it has started to operate.

### SUMMARY OF THE INVENTION

The present invention is directed towards solving the problem of simplifying the servicing of a portable communication device after it has started to operate.

One object of the present invention is to provide a method that solves the problem of simplifying the servicing of a portable communication device after it has been started to operate.

According to a first aspect of the present invention this problem is solved by a method of providing information relating to the service of a portable communication device to a service providing centre comprising the steps of:
fetching a set of device related data when it is necessary to obtain service or provide the status of the device,
where said set of service related data is stored locally in the device as a single unit and at least comprises data regarding
   type of device,
   type of software provided in the device, and
   network settings for communication using at least one communication network, and
sending said set of data to the service providing centre.

A second aspect of the present invention includes the steps of the first aspect, wherein the step of fetching comprises fetching said set of data in dependence of an obtained message sending code.

A third aspect of the present invention includes the steps of the second aspect and further comprises the step of receiving said code from a user of the device via a user input unit.

A fourth aspect of the present invention includes the steps of the second aspect and further comprises the step of receiving an electronic message from the service providing centre comprising said code.

A fifth aspect of the present invention includes the steps of the first aspect and furthermore comprises the step of storing information about performed services in said set of data after services based on the sent set of data has been performed on the device.

A sixth aspect of the present invention includes the steps of the first aspect, wherein said set comprises settings regarding types of hardware modules provided in the device.

A seventh aspect of the present invention includes the steps of the first aspect, wherein said set comprises settings regarding proximity devices or proximity technology.

An eighth aspect of the present invention includes the features of the first aspect and further comprises the step of receiving device performance data from different parts of the device regarding the performance of the device and storing said device performance data in said set of data.

A ninth aspect of the present invention includes the features of the first aspect and further comprises the step of receiving network capability data regarding at least one communication network to which the device may be connected and storing said network capability data in said set of data.

Another object of the present invention is directed towards providing a portable communication device that solves the problem of simplifying the servicing of the portable communication device after it has started to operate.

According to a tenth aspect of the present invention, this problem is solved by a portable communication device for providing information relating to the service of the portable communication device to a service providing centre comprising:
a radio communication unit,
a set of device related data being stored locally in the device as a single unit and at
least comprising data regarding
   type of device,
   type of software provided in the device, and
   network settings for communication using at least one communication network, and
a control unit arranged to fetch said set of device related data and order said radio communication unit to send said set of data to the service providing centre, when it
is necessary to obtain service or provide the status of the device.

An eleventh aspect of the present invention includes the features of the tenth aspect, wherein said control unit is arranged to fetch said set of device related data in dependence of an obtained message sending code.

A twelfth aspect of the present invention includes the features of the eleventh aspect and further comprising a user input unit arranged to receive said code from a user of the device and forward it to said control unit.

A thirteenth aspect of the present invention includes the features of the eleventh aspect, wherein said radio communicating unit is arranged to receive an electronic message from the service providing centre comprising said code and forward it to said control unit.

A fourteenth aspect of the present invention includes the features of the tenth aspect, wherein said control unit is further arranged to store information about performed services in said set of data after said services based on the sent set of data has been performed on the device.

A fifteenth aspect of the present invention includes the features of the tenth aspect, wherein said set comprises settings regarding types of hardware modules provided in the device.

A sixteenth aspect of the present invention includes the features of the tenth aspect, wherein said set comprises settings regarding proximity devices or proximity technology.

A seventeenth aspect of the present invention includes the features of the tenth aspect, wherein said control unit is further arranged to receive device performance data from different parts of the device regarding the performance of the device and storing said device performance data in said set of data.

An eighteenth aspect of the present invention includes the features of the tenth aspect, wherein said control unit is further arranged to receive network capability data regarding at least one communication network to which the device may be connected and store said network capability data in said set of data.

A nineteenth aspect of the present invention includes the features of the tenth aspect, wherein the device is a cellular phone.

Another object of the present invention is directed towards providing a computer program product that solves the problem of simplifying the servicing of a portable communication device after it has been started to operate.

According to a twentieth aspect of the present invention, this problem is solved by a computer program product for providing information relating to the service of a portable communication device to a service providing centre, comprising:
computer program code, to make the portable communication device execute,
when said program code is loaded in the portable communication device,
   fetch a set of device related data when it is necessary to obtain service or provide the status of the device, where said set of service related data is stored locally in the device as a single unit and at least comprises data regarding
   type of device,
   type of software provided in the device, and
   network settings for communication using at least one
   communication network, and
   at least order the sending of said set of data to the service providing centre.

The invention has the following advantages. A lot of the relevant information that is of use for the service centre is provided and sent in a concentrated form, which means that a user can be more quickly serviced, and the problems associated with the phone more quickly resolved. The service centre can also more easily obtain the status of the device for determining appropriate servicing actions. The user does also not have to locate different settings and other information by navigation through a long and complicated menu system of the phone. If the service centre is run by an operator of the communication network, this operator is furthermore provided with better control of service performed and network settings used. The present invention also lowers the total cost associated with the service centre. The invention is also of advantage to the phone manufacturer, in that it can get better statistics relating to faults and bugs of released software and number of errors as well as to be able to make preventive support of phones. The invention according to the second and eleventh aspects has the further advantage of providing simple and automatic selection of the set of service related data for sending to the service providing centre.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 shows a portable communication device in the form of a cellular phone,
fig. 2 schematically shows the phone in fig. 1 connected to an after sales server via a cellular network and communicating with a second phone via a proximity communication technology,
fig. 3 shows a block schematic of the relevant parts of the cellular phone for providing the present invention,
fig. 4 schematically shows a set of service related data provided according to the principles of the present invention,
fig. 5 shows a flow chart of a method according to a first embodiment of the present invention,
fig. 6 shows a flow chart of a method according to a second embodiment of the present invention, and
fig. 7 shows a CD Rom on which program code for executing a method according to the invention is provided.

### DETAILED DESCRIPTION OF EMBODIMENTS

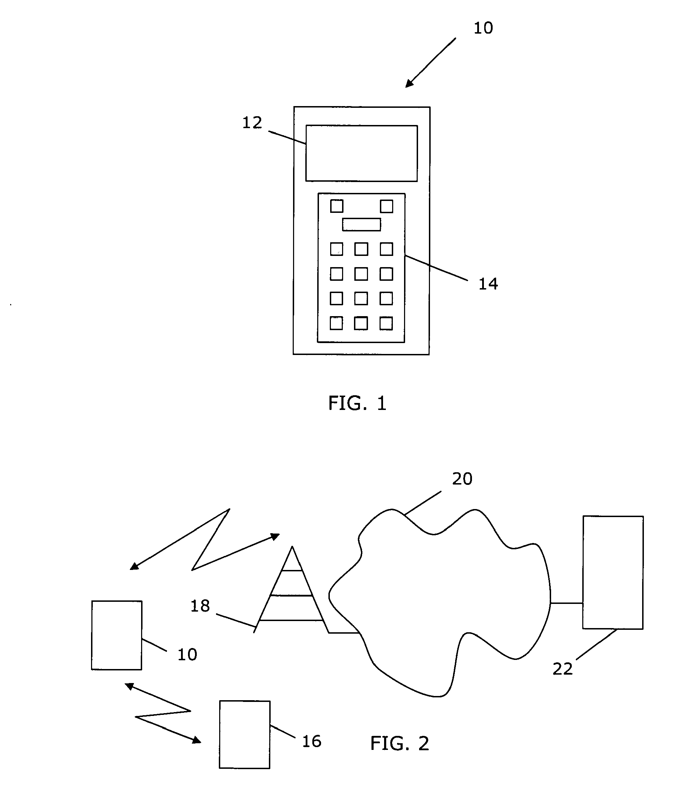

A portable communication device 10 according to the present invention is shown in fig. 1. In the preferred embodiment the device is a cellular phone 10 having a display 12 and a user input unit in the form of a keypad 14 including a number of keys. The keypad 14 is used for entering information such as selection of functions and responding to prompts and the display 12 is used for displaying functions and prompts to a user of the phone. The phone 10 also includes an antenna used for communication with other users and an after sales server of a service providing centre via a network. The antenna is in-built into the phone and thus not shown in fig. 1. A cellular phone is just one example of a device in which the invention can be implemented. The invention can for instance also be used in a PDA (personal digital assistant), a palm top computer and a lap top computer as long as the device has access to some kind of wireless network over which messages can be sent.

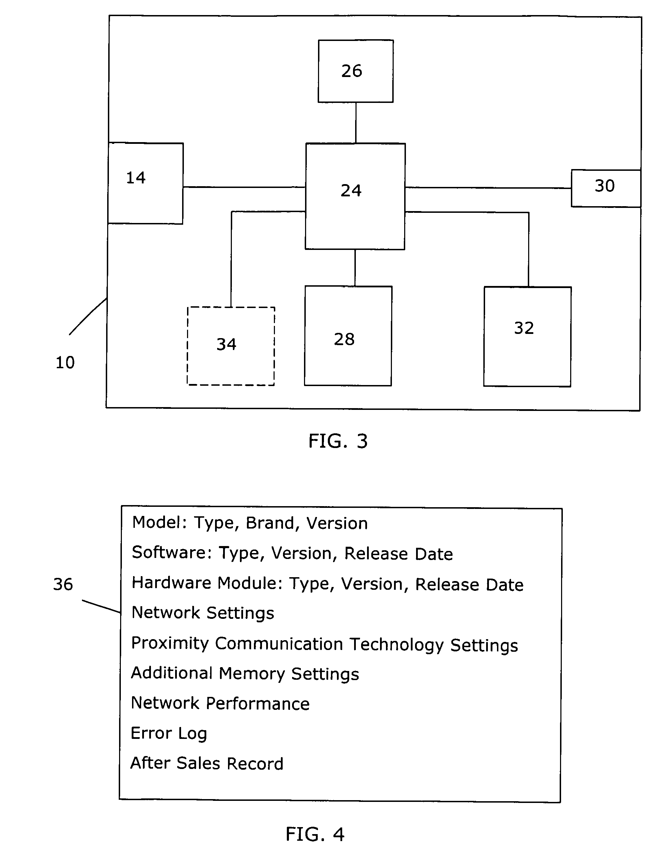

Fig. 2 shows the cellular phone 10 connected to a cellular network 20 via a base station 18 for communication with a server 22 connected to the network 20, which server 22 belongs to a service providing centre, where service of the phone is provided. The service providing centre can be provided by the phone manufacturer, but is normally associated with the operator of the network in question. The network is normally a GSM-type of network. It is of course also possible that the network is a UMTS or a GPRS network. The phone can furthermore be provided with functionality for communicating with all or some of these networks. The server 22 is, as was mentioned above, associated with a service centre where after sales functions is performed in relation to the phone. The centre can also include a call centre, which the user of the phone can call. With the service centre are also associated service or after sales personnel that are able to provide service of the phone, like provide downloading of updated software versions of software in the phone or provide different types of settings to be applied to the phone.

Fig. 2 also shows the phone communicating with another portable communication device 16 via a proximity communication technology, which can be Bluetooth™, Infra red communication or some other type of proximity communication technology.

Fig. 3 shows a part of the interior of the cellular phone 10 that is relevant for the present invention. The phone 10 includes a control unit 24 connected to a radio communication unit 26, the user input unit 14, a proximity communication unit 30, a proximity device in the form of a removable additional memory unit 34, for instance in the form of a memory stick, an application unit 32 running a certain application, like a calendar, a WAP browser or some other type of application, as well as to a service data storage 28. It should be realised that there are several applications that can be provided in the phone and that these are normally provided in the form of software that is run using one or more processors of the phone. For the sake of simplicity only one such application is indicated by the application unit 32.

Fig. 4 shows a set of service related data provided as a single unit in the form of an after sales file 36 comprising data relevant to the phone that is of interest to the service centre. This file 36 comprises information regarding type of phone or information about the phone model, and here the brand, the type and the version of the type in question, information about the software in the phone, for instance software related to different applications, and then also the type, the version and the release date. An example is the type, version and release date of the operating system. It should also be realised that more software can be indicated in this way, like WAP software MP3 player software etc. The file 36 also includes information regarding hardware modules provided in the phone, also here indicating type, version and release date of the hardware module in question. Examples of a hardware module can be the radio communication unit and the proximity communication unit. The file also includes settings related to different type of networks, like settings for WAP, GSM and UMTS including messaging settings like e-mail settings. Such settings typically include APN number, IP number, gateway numbers and security parameters. The file furthermore includes settings regarding proximity communication technology, like settings of different Bluetooth™ parameters. The file also includes settings regarding the removable additional memory unit. The file furthermore includes network capability data, and here in the form of historical network performance data, like the type of signal strengths encountered by the phone and other possible historical network performance data. As an alternative or additionally, the network capability data can also include network characteristics data in the form of information about activities the network can handle. There is also an error log provided, where earlier errors, faults and bugs encountered in the phone are logged as well as an after sales record indicating after sales activities performed in the phone, such as for instance software upgrades performed and settings that have been changed. In this way a set of service related data is provided in a single unit in a compact and concentrated form.

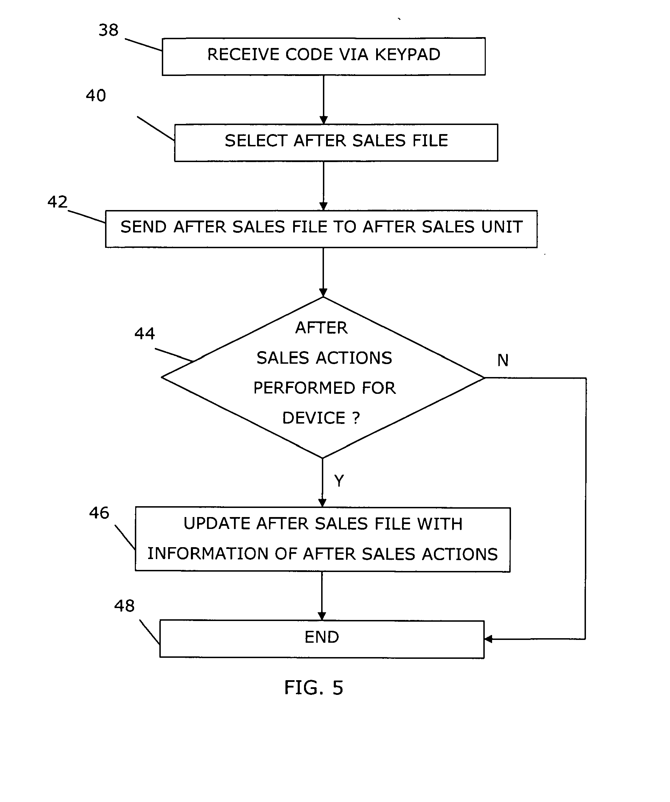

The functioning of the present invention will now be described in relation to the previously described fig. 1 - 4 together with fig. 5, which shows a flow chart of a first embodiment of a method according to the present invention.

A user has purchased a phone 10, initialised it and stated to operate it. After a while the user may encounter some problems with the phone 10. The method thus starts when a user of the phone 10 needs to contact the after sales service centre because of some fault or other malfunction regarding the phone 10. He can then call the service centre or also contact the service centre through accessing a web page of the service centre, for instance using a separate PC. When the user does this he is urged to enter a certain message sending code into his phone 10, either by an after sales person telling him orally or by being prompted via the web page. The user then enters the code via the keypad 14, which can for instance be the entering of a certain number/character combination, like for instance the combination #12#. When the keypad 14 receives this code, step 38, it forwards it to the control unit 24, which in turn fetches or selects the after sales file 36 from the service data storage 28 based on the obtained code, step 40. The control unit 24 thereafter orders the radio communication unit 26 to send at least the content of the after sales file in an electronic message to the server 22 of the service centre, step 42. The file 36 can be sent in an attachment to the electronic message or the control unit 24 can extract the content in the file 36 and provide it as a text string in the electronic message. The electronic message can be an SMS message, an MMS message or some other type of electronic message. Once the service centre server 22 receives this message, it is forwarded to an after sales person handling the service of the phone and then service can be provided in an efficient manner, since then the after sales person has access to a lot of information that simplifies the search for the error, fault or malfunctioning of the phone. By for instance looking at a certain version of a piece of software, it might be easy to identify the problem associated with the phone. Service can be provided in a multitude of ways. The service centre can send updates of software to be provided, it can also send new settings to be applied to the phone, where the settings can be provided orally to the user and he being guided to apply the new settings over the phone. New settings can also be provided in a specialised electronic message, which the radio communication unit 26 receives and forwards to the control unit 24. The control unit 24 can then read and directly apply the settings to the part of the phone where they are to be applied. Thereafter the control unit 24 checks if after sales actions have been performed, like if settings have been changed, software updates received or specialised messages received. If it has not, step 44, the method is ended, while if it has, step 44, the control unit 24 goes on and updates the after sales file 36 with information of the after sales actions performed, i.e. updates the after sales record, step 46, whereupon the method is ended.

It is here also possible that the method includes additional steps. The control unit 24 can for instance continually receive performance data regarding the performance of the device and/or the network and update the file 36 with said data. It is for instance possible that the radio communication unit 26 updates the control unit regarding network performance data, like different signal strength measurements as well as with other information like information on lost connections, which data is entered into the network performance section of the file 36. It is furthermore possible that different parts of the phone report device performance data regarding the performance of the device, like for instance the application unit 32 reporting application errors to the control unit 24. The control unit then stores this reported device performance data in the error log of the file 36.

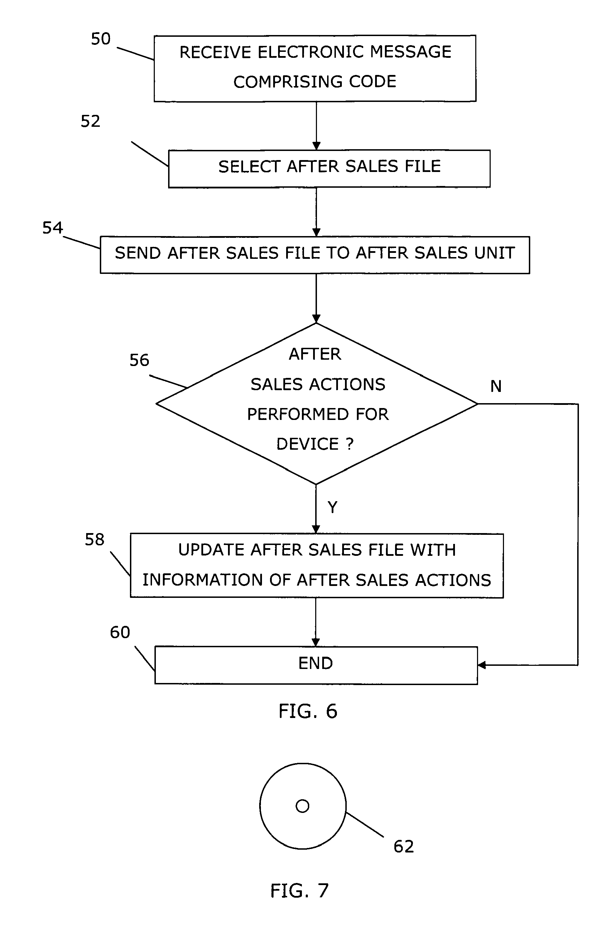

Fig. 6 shows a flow chart of a second alternative embodiment of the present invention. Here, the user has contacted the service centre in one of the ways described above and indicated the phone number of the phone. The after sales server 22 here then sends a specialised electronic message comprising a certain message sending code, such as a specialised SMS message, to the phone 10, step 50. The message, which also includes the identity of the server 22, is received by the radio communication unit 26 and then forwarded to the control unit 24. Based on this obtained code, the control unit 24 fetches the file 36 in storage 28 and orders the radio communication unit 26 to send the content of the file to the server 22, step 54. Thereafter the after sales activities and updating is performed in steps 56, 60 in the same way as was previously described for steps 44 - 48 of fig. 5.

There are some possible variations which can be made in the present invention. First of all, all information provided in the after sales file is dependent on the presence of the corresponding functionality of the phone. For instance, if the phone does not have a proximity communication technology, there is no need for such setting information relating to this in the file. The same does of course also apply for the additional memory units. It is furthermore possible that after sales records are not provided. Also the error log might not be provided as well as network performance information. What is important though is that model information, type of software information and network settings information is provided in the file. Apart from this the file can thus include a multitude of combinations of the other pieces of information and thus be limited to only the above-mentioned important information. It is furthermore possible that the method is initiated by the service centre, such that the service centre obtains the status of the device, for instance in order to determine appropriate servicing actions.

The control unit according to the present invention is preferably provided in the form of one or more processors with corresponding memory containing the program code, whereas the service data storage is a memory or part of a memory shared with other resources of the phone. Normally the radio communication unit is provided as a separate hardware module, for instance in the form of an ASIC circuit, which also the proximity communication unit can be provided as. As mentioned earlier the additional memory unit is usually a removable memory like a memory stick

The program code mentioned above can also be provided on a computer program product such as a CD ROM disc 62 as depicted in fig. 7, which will perform the invention when loaded into a phone having suitable processing capabilities. Naturally other types of products can be provided for this, like for instance a removable memory like a memory stick. The computer program product can also be provided as software, which is downloaded remotely from a server either outside or inside the cellular network or be downloaded via a computer like a PC to which the phone is temporarily connected.

The present invention has several advantages. A lot of the relevant information that is of use for the service centre is provided and sent in a concentrated form, which means that a user can be more quickly serviced, and the problems associated with the phone more quickly resolved. The user does also not have to locate different settings and other information by navigation through a long and complicated menu system of the phone. If the service centre is run by an operator of the communication network, this operator is furthermore provided with better control of service performed and network settings used. The present invention also lowers the total cost associated with the service centre. The invention is also of advantage to the phone manufacturer, in that it can get better statistics relating to faults and bugs of released software and number of errors as well as to be able to make preventive support of phones. By using a certain code it is furthermore possible to easily and automatically select and send the set of service related data.

## Claims

1. Method of providing information relating to the service of a portable communication device (10) to a service providing centre (22) comprising the steps of:
fetching a set (36) of device related data when it is necessary to obtain service or provide the status of the device, (step 40; 52),
where said set of service related data is stored locally in the device as a single unit and at least comprises data regarding
type of device,
type of software provided in the device, and
network settings for communication using at least one communication network (20), and
sending said set of data to the service providing centre, (step 42; 54).

2. Method according to claim 1, wherein the step of fetching comprises fetching said set of data in dependence of an obtained message sending code.

3. Method according to claim 2, further comprising the step of receiving said code from a user of the device via a user input unit (14), (step 38).

4. Method according to claim 2, further comprising the step of receiving an electronic message from the service providing centre comprising said code, (step 50).

5. Method according to any previous claim, further comprising the step of storing information about performed services in said set of data after services based on the sent set of data has been performed on the device, (step 46; 58).

6. Method according to any previous claim, wherein said set comprises settings regarding types of hardware modules provided in the device.

7. Method according to any previous claim, wherein said set comprises settings regarding proximity devices or proximity technology.

8. Method according to any previous claim, further comprising the step of receiving device performance data from different parts of the device regarding the performance of the device and storing said device performance data in said set of data.

9. Method according to any previous claim, further comprising the step of receiving network capability data regarding at least one communication network to which the device may be connected and storing said network capability data in said set of data.

10. Portable communication device (10) for providing information relating to the service of the portable communication device to a service providing centre (22) comprising:
a radio communication unit (26),
a set (36) of device related data being stored locally in the device as a single unit and at least comprising data regarding
type of device,
type of software provided in the device, and
network settings for communication using at least one communication network (20), and
a control unit (24) arranged to fetch said set of device related data and order said radio communication unit to send said set of data to the service providing centre, when it is necessary to obtain service or provide the status of the device.

11. Portable communication device according to claim 10, wherein said control unit is arranged to fetch said set of device related data in dependence of an obtained message sending code.

12. Portable communication device according to claim 11, further comprising a user input unit (14) arranged to receive said code from a user of the device and forward it to said control unit.

13. Portable communication device according to claim 11, wherein said radio communicating unit is arranged to receive an electronic message from the service providing centre comprising said code and forward it to said control unit.

14. Portable communication device according to any of claims 10 - 13, wherein said control unit is further arranged to store information about performed services in said set of data after said services based on the sent set of data has been performed on the device.

15. Portable communication device according to any of claims 10 - 14, wherein said set comprises settings regarding types of hardware modules provided in the device.

16. Portable communication device according to any of claims 10 - 15, wherein said set comprises settings regarding proximity devices or proximity technology.

17. Portable communication device according to any of claims 10 - 16, wherein said control unit is further arranged to receive device performance data from different parts of the device regarding the performance of the device and storing said device performance data in said set of data.

18. Portable communication device according to any of claims 10 - 17, wherein said control unit is further arranged to receive network capability data regarding at least one communication network to which the device may be connected and store said network capability data in said set of data.

19. Portable communication device according to any of claims 10 - 18, wherein the device is a cellular phone.

20. A computer program product (62) for providing information relating to the service of a portable communication device (10) to a service providing centre (22), comprising:
computer program code, to make the portable communication device execute, when said program code is loaded in the portable communication device,
fetch a set of device related data when it is necessary to obtain service or provide the status of the device, where said set of service related data is stored locally in the device as a single unit and at least comprises data regarding
type of device,
type of software provided in the device, and
network settings for communication using at least one
communication network (20), and
at least order the sending of said set of data to the service providing centre.
